# EUROPEAN PATENT SPECIFICATION

(11) **EP 1 211 222 B1**
(45) Date of publication and mention of the grant of the patent: **23.09.2009**
(21) Application number: 01126734.1
(22) Date of filing: 09.11.2001
(51) Int. Cl.: C01B 31/20

(54) **Process and plant for obtaining a CO2-enriched gas stream**
Verfahren und Anlage zur Gewinnung eines mit CO2 angereicherten Gasstroms
Procédé et installation d' obtention d'un flux gazeux enrichi en co2

(43) Date of publication of application: 05.06.2002
(73) Proprietor: Messer France S.A., 92600 Asnieres (FR)
(72) Inventor: Matheoud, Patrick, 92390 Villeneuve la Garenne (FR); Zimmer, Jean-Claude, 95250 Beauchamp (FR)
(74) Representative: Münzel, Joachim R.

(56) References cited:
- FR-A- 2 570 620
- FR-A- 2 584 308
- US-A- 2 080 981
- CHEMICAL ABSTRACTS, vol. 113, no. 8, 20 August 1990 (1990-08-20) Columbus, Ohio, US; abstract no. 62286h, YU HONGXI: "Production of carbon dioxide in a retort using a shaft furnace" XP000183576 & CN 1 035 478 A 13 September 1989 (1989-09-13)

## Description

The invention relates to the general technical field of the purification of waste carbon dioxide in the light of its many commercial applications in the form of gas or liquid.

In many fields, carbon dioxide is used for its chemical characteristics or, and perhaps more generally, for its refrigeration characteristics when it is in a liquid state that has been conferred on it beforehand.

The applications of carbon dioxide are sufficiently numerous and well known not to have to refer to them, even nonexhaustively.

One of the characteristics of carbon dioxide resides in the fact that it must be transported to the sites where it is consumed or used in its liquid form and such transportation is carried out by road or rail tankers.

Because of the considerable transport costs associated with such a method of conveying it, carbon dioxide suppliers cannot do other than seek production sites which are located within a maximum defined radius of travel for a given concentration of users since, beyond this relative proximity factor, the transport cost is a handicap which may become unacceptable for any act of commercialization from too remote a production site.

This is the reason why producers of carbon dioxide, especially liquid carbon dioxide, have production sites which are geographically distributed.

Carbon dioxide supplier sites may be considered limited and generally amount to three types of production sources which provide concentrations of the carbon dioxide produced which range for the lowest concentration from 2% to 15% for the medium concentration from 15% to 30% and for the highest concentration from 90% to 99%.

It is clear that the highest operating profitability is achieved using high-concentration sources which, in general, come from industrial activity such as the manufacture of hydrogen or ethylene oxide.

The industrial trend is toward progressively reducing these production sources for reasons which in general involve industrial production concentrations or else the abandonment of certain producer sites because of changes in the manufacturing processes.

Faced with such a reduction in available sources, it is therefore of particular concern to be able to find replacement sources so as always to meet the demand for CO₂, especially liquid CO₂, which tends to increase continually.

In the current state of the art, CO₂ purification/liquefaction requires a minimum concentration of 90% in order to be produced under acceptable technical-economical conditions.

To use a source of the first or even the second category, it is therefore necessary to preconcentrate the CO₂.

The currently known processes involve compression/selective permeation phases, the permeation being through membranes, or absorption/desorption phases, the absorption being in suitable solvents, or else absorption/desorption phases, the absorption being on solid supports, or combinations of these principles. In almost all cases, the investment and operating costs required for these processes are too high for them to be profitable.

The need is therefore to be able to have a technique suitable for enriching with carbon dioxide the effluents from production sources of the second category, so as to be able to meet the requirements of consumers, while still complying, necessarily, with the distance factor between the production site and the site of use, which entails an acceptable transport cost.

The document US 2,080,981 discloses a process for the production of lime and carbon dioxide comprising calcinating granulated limestone in an airtight tube disposed inside a combustion chamber, said airtight tube being heated by the combustion gases and withdrawing the carbon dioxide by suction action.

It is thus an object of the invention to propose a novel technique of obtaining a CO₂-enriched gas stream by providing the use of adaptable technical means in plants for producing calciferous compounds, especially lime production plants, which offer the characteristic and the advantage of being generally distributed more homogeneously over all territories and of thus being able to form production sites for which the costs of transporting carbon dioxide, especially liquid carbon dioxide, remain acceptable for users.

To achieve the above objective, the process for obtaining a CO₂-enriched gas stream from a plant for producing calciferous compounds according to the invention is one wherein:
- combustion gases are produced, in a steady state, from a burner fed with a fuel and with an oxidizer from which most of the nitrogen has been removed,
- after dust removal and preheating, some of the smoke from the calcining operation is recycled into the kiln as a circulating gaseous charge contributing to forming the gas mixture by incorporating it into the combustion gases and is intended to maintain the gas combustion and flow parameters, in order to increase the CO₂ concentration,
- then, finally, the gas stream thus enriched with CO₂ is extracted in order to direct it into a purification-liquefaction plant.

The subject of the invention is also a plant for implementing such a process.

Finally, the subject of the invention is also the particular application of the process to a lime production plant or, alternatively, to a plant for producing precipitated calcium carbonate, which represents an elementary product widely used in the papermaking field.

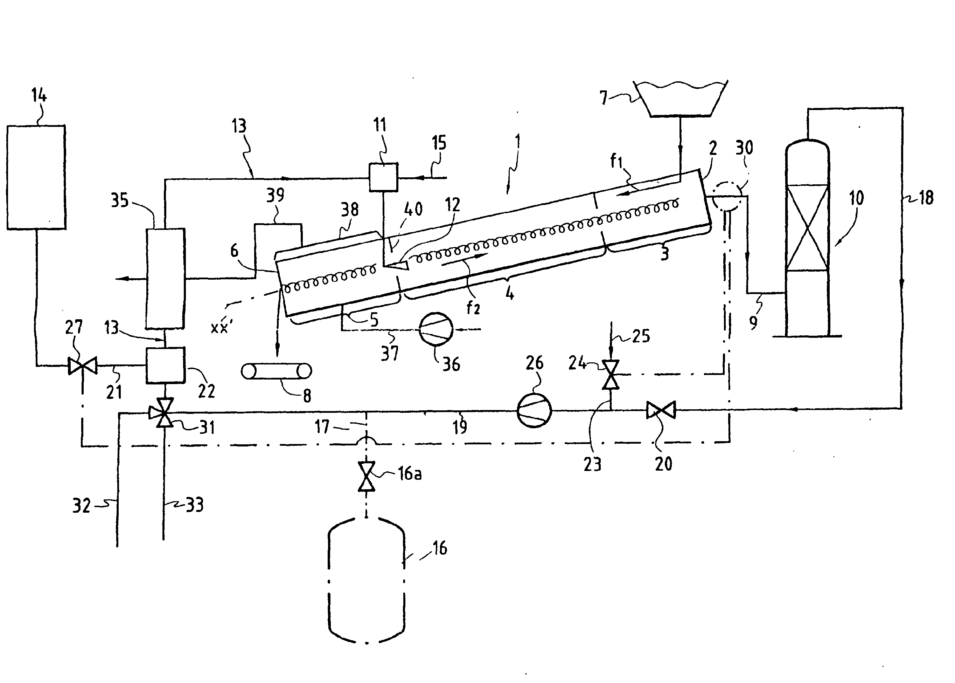

Various other features will become apparent from the description given below with reference to the appended drawing which shows, by way of nonlimiting example, an embodiment and method of implementation forming the subject of the invention.

The **single figure** illustrates, schematically, a plant for implementing the process.

This **single figure** shows a plant for producing calciferous products, and more particularly lime, from pulverulent and/or granular calciferous materials. Within the context of the invention, it must be understood that such a plant may also be reserved for the production of other calciferous products, such as calcium carbonate which is generally used on a wide scale as a filler for the manufacture of paper and/or board.

A plant for producing calciferous products comprises a kiln **1**, preferably but not exclusively of the rotary type, the axis **x-x**' of which is slightly inclined to the horizontal. Such a kiln is associated with means of supporting it and with means of rotating it, these not being shown in the drawing because a person skilled in the art is well aware of these.

The kiln **1** may be regarded as an enclosure defining, from an inlet **2,** and inlet zone **3** called the preheating zone, a calcining zone **4** and a zone called the cooling zone **5** which connects with an outlet **6** for the calciferous products obtained. The succession of zones **3** to **5** must be considered in conjunction with the inlet section **2** which occupies the uppermost part of the kiln **1** when the latter has an axis **x-x'** inclined to the horizontal.

The inlet section **2** connects with means for conveying the calciferous products or materials, of a pulverulent and/or granular nature, which are, for example, continuously poured in via a hopper **7**.

It goes without saying that the technical means attached to such a feed structure, must also be regarded as known by those skilled in the art, both in terms of their structure and the operating means associated therewith; in particular, the weight control must be respected.

The calciferous products injected into the inlet **2** are thus conveyed by the usual means, in the direction of the arrow **f₁**, in order in particular to pass through the calcining zone **4** before being taken up by the cooling zone **5,** vertically beneath which the calciferous products obtained are taken up, especially by a transporter **8.**

In a plant of the above type, means are conventionally used to produce, within the kiln **1,** a high-temperature gas mixture flowing as a countercurrent, i.e. in the direction of the arrow **f₂**, from the outlet **6,** or near the latter, toward the calcining zone **4** and then toward the inlet zone **3,** beyond which the gaseous products, resulting from the high-temperature mixture and the smoke from the calcining operation, are removed via a flue **9** so as to be sent to a treatment and discharge plant **10.** Conventionally, the plant **10** is designed for dust removal, or even scrubbing, and cooling of the smoke in which a CO₂ concentration is present, generally being between 15% and 30% in the case of a lime production plant.

The high-temperature gas mixture is produced by a burner **11**, especially of the gas-burning type, which is connected to an oxidizer feedline consisting, conventionally in the prior art, of an air feedline.

The high-temperature gas mixture which is thus produced includes, apart from the conversion gases and the smoke from the calcining, a significant charge of nitrogen, an inert gas found in the initial composition of the air and which is continuously removed via the flue **9.**

This charge of gaseous products having an initially inert character is responsible for the relatively low, but nevertheless exploitable, concentration of the carbon-dioxide-laden smoke produced.

In order to enrich the gas stream discharged via the flue **9** with carbon dioxide, the process according to the invention consists in using a burner **11** whose outlet nozzle **12** is located in the kiln **1,** near the start of or entry into the calcining zone **4** when considering the direction of flow of the gas mixture as shown by the arrow **f₂**.

The burner **11** is designed to be connected to a feedline **13** capable of supplying it with an oxidizer containing no inert gas, for example pure or almost pure oxygen coming from a unit **14** which may be a unit for instant production or for storage in any suitable and rechargeable form.

Under steady operating conditions, the burner **11** which is fed with fuel, preferably gaseous fuel, via a line **15,** delivers, into the kiln **1,** high-temperature combustion gases which are responsible for calcining the calciferous products flowing in the direction of the arrow **f₁**.

To compensate for the lack of inert-gas charge, normally forming part of the composition of the air used as oxidizer, provision is made according to the invention to inject and recycle a gaseous charge based on carbon dioxide in order to make up, by incorporation with the combustion gases, the circulating gaseous charge responsible for establishing the steady-state operating conditions of the plant.

Within the meaning of the invention, the recycled carbon dioxide charge may come from the opening of a valve **16a** with which a storage tank **16** is fitted, said storage tank being connected via a line **17** to the feedline **13.**

In operation, the circuit for circulating the gases and the smoke receives a charge of carbon dioxide, in such a way that the gas mixture stabilizes by incorporation with the combustion gases from the burner. In this way, the smoke from the calcining operation, which is responsible for the carbon dioxide production, is not in any way diluted within a charge of inert gas and it follows that the gas stream output by the tower **10** is enriched with carbon dioxide compared with that produced by a conventionally designed plant for the production of calciferous products.

According to the invention, a line **18** connects the tower **10** to a recycling line **19** provided with a valve **20** which is connected to the line **13.** In the example, the line **17** is connected to the line **19.**

In a practical use of the above means, provision is made for the line **13** to be connected to the source **14** for producing pure or almost pure oxygen via a feedline **21** terminating in a mixer **22** to which is joined, upstream, the line **19.**

After an operation as mentioned above, the valve **16a** is closed so as to isolate the supply and top-up tank **16** from the circuit in which the gaseous products resulting from the operation of the plant circulate, which circuit consists of the line **13,** the nozzle **12,** the kiln **1,** the flue **9,** the unit or tower **10** and the lines **18** and **19.**

In a development, within the context of the invention, provision is made to place, in the line **19,** a valve-off **23** controlled by a valve or valve **24** and communicating with an air intake unit **25.**

According to this arrangement, the plant is operated initially by feeding the burner **11** with a fuel consisting of ambient air, which, after opening the valve **24** and closing the valve **20,** flows via the line **19.** Such a flow in the line **19** is preferably produced by a pressurizing device **26.**

The air, as oxidizer, then runs along the feedline **13** in order to operate the burner **11** which delivers combustion gases injected into the inside of the kiln **1.**

Next, the feedline **21** is then opened, by means of a valve **27,** said line **21** delivering the additional supply of pure or almost pure oxygen to the burner **11.**

According to the invention, provision is made to operate the valves **24** and **27,** which are of the proportional type and are inversely conjugate, so that the gradual opening of the valve **27** is concomitant with proportional gradual closing of the valve **24** so as, gradually, to change the oxidizer feed conditions for the burner **11** for the purpose of favoring pure or almost pure oxygen as the oxidizer, of removing most of the nitrogen and of gradually increasing the CO₂ concentration in the gas stream produced, which is, in the operating phase, entirely recycled via the line **19.** This transient phase continues until the valve **24** is closed, when pure or almost pure oxygen is fed into the burner **11** so as then to set up the steady-state operating conditions described above. Until the steady-state conditions allowing a CO₂ concentration of at least 90% to be achieved have been reached, at least part of the gas stream recycled by the line **19** is tapped off via a valve **31** to a vent **32** to atmosphere. When the concentration is reached, the valve **31** is operated in order to close the vent **32** to atmosphere and to open the communication via a line **33** with a purification-liquefaction plant.

It is advantageous, as shown in the drawings, for the opening and closing of the valves **24** and **27** to be controlled by a sensor **30** responsible for detecting the variation in carbon dioxide concentration in the stream flowing in the flue **9.**

According to another arrangement of the invention, provision is made to place, in the line **13** and, for example, downstream of the mixer **22,** a heater **35** which is used to heat the mixture, comprising oxygen and the recycled carbon-dioxide-based gaseous charge, to a burner inlet temperature which is compatible with the optimum conditions for operating the latter.

According to a development of the invention, the heater **35** consists of a heat exchanger through which, moreover, flows a stream of air taken from the ambient air via a circulator **36** and conducted via a line **37** through the output zone **5** so as to cool the calciferous products obtained. The circuit for cooling the zone **5** includes a header **38** which is joined via a line **39** to the heater **35** after which the air that has been used as a cooling vehicle is discharged into the atmosphere.

To prevent any injection of cooling air into the calcining zone **4,** the zone **5** is physically isolated from the zone **4** by a screen or partition **40** through which the transporter and the calciferous products that the latter supports are designed to pass.

It goes without saying that with the means of the invention, as described above, it is also possible to operate the plant in a conventional mode when, for example, it is not desired to enrich the gas stream produced and discharged via the flue **9** with carbon dioxide.

Thus, in such a case and as long as there is functional compatibility with the burner **11,** all that is required is to close the valve **27** and open the valve **24** so that the burner **11** is fed only with air-based oxidizer.

As mentioned above, the subject of the invention is preferably applicable to calcium oxide production plants, generally called lime kilns, which, because of their distribution over the various national territories constitute production sources which can be easily enriched with carbon dioxide by using the means of the invention.

The trials that have been carried out have made it possible to consider that eliminating air as the oxidizer and replacing it with pure or almost pure oxygen enables, all other things being equal, the carbon dioxide concentration to be enriched to above 90% in the case of a lime production plant.

Apart from the abovementioned advantages, it should be noted that the use of recycled CO₂ in the kiln makes it possible to acquire an additional degree of freedom in operating the kiln, which necessarily makes it possible to increase the production capacity and/or to decrease the specific fuel consumption and, more generally, to achieve better control of the operating parameters of the kiln.

Another application forming a subject of the invention is the conversion of a plant for producing precipitated calcium carbonate, within which, or upstream of which a plant for the conversion of calciferous products is necessarily installed.

## Claims

1. A process for obtaining a CO₂-enriched gas stream from a plant for producing calciferous compounds, of the type comprising a rotary kiln having an inlet and an outlet and in which flow, as a countercurrent, on the one hand, pulverulent and/or granular calciferous materials injected via the inlet and having to undergo a calcining phase after which the compounds produced are extracted via the outlet of the kiln and, on the other hand, a high-temperature gas mixture injected via the outlet of the kiln in order to gradually calcine the materials, said calcining producing smoke which includes CO₂ and is extracted via the inlet of the kiln,
wherein:
• combustion gases are produced, in a steady state, from a burner fed with a fuel and with an oxidizer from which most of the nitrogen has been removed,
• after dust removal and preheating, some of the smoke from the calcining operation is recycled into the kiln as a circulating gaseous charge contributing to forming the gas mixture by incorporating it into the combustion gases and is intended to maintain the gas combustion and flow parameters, in order to increase the CO₂ concentration,
• then, finally, the gas stream thus enriched with CO₂ is extracted in order to direct it into a purification-liquefaction plant.

2. The process as claimed in claim 1, wherein, during operation of the plant, an amount of CO₂ equivalent to the recycling charge is injected into the recycling circuit.

3. The process as claimed in claim 1, wherein, during operation of the plant, the gas mixture based on the combustion gases from the burner fed with fuel and with air is produced and then the smoke from calcining is gradually recycled in order to enrich the recycling charge with CO₂ at the same time as the intake of air is reduced in favor of an oxygen-enriched oxidizer mixture until the air has been substituted by pure or almost pure oxygen.

4. The process as claimed in one of claims 1 to 3, wherein the gas mixture is produced so as to inject it into the kiln, upstream of the cooling zone which precedes the outlet for the calciferous compounds produced and wherein said cooling is achieved by means of pressurized air which is prevented from penetrating the calcining zone of the kiln.

5. The process as claimed in one of claims 1 to 4, wherein some of the smoke from the calcining operation is tapped off into the atmosphere until the desired CO₂ concentration is reached and wherein, thereafter, the valve-off to atmosphere is closed and then the communication with a CO₂ purification-liquefaction line is opened.

6. Application of the process as claimed in any one of claims 1 to 5 to a lime production plant.

7. Application of the process as claimed in any one of claims 1 to 5 to a plant for producing precipitated calcium carbonate.

8. A plant for implementing the process as claimed in one of claims 1 to 5, of the type comprising:
• a kiln (**1**) having an inlet zone called the preheating zone (**3**), a calcining zone (**4**) and an outlet zone called the cooling zone (**5**), through which kiln flow, as a countercurrent, on the one hand, calciferous materials injected via the inlet zone in order to undergo calcining, resulting in the production in the outlet zone of calciferous compounds, and, on the other hand, a high-temperature gas mixture injected via the outlet in order to calcine the calciferous materials, which calcining produces smoke, including CO₂, which is sent, from the inlet zone, to a treatment and discharge unit (**10**),
• a burner (**11**) responsible for producing the high-temperature gas mixture, and
• a circuit (**37, 35**) for cooling the calciferous compounds, which plant comprises:
• means for producing, in the calcining zone of the kiln, a high-temperature gas mixture consisting of the combustion gases produced by the burner from which most of the nitrogen of the oxidizer has been removed and an essentially CO₂-based recyclable charge;
• and means for directing the recycled and CO₂-enriched gas mixture to a purification-liquefaction plant.

9. The plant as claimed in claim 8, wherein the burner is connected to a fuel feed (**15**) and to an oxidizer feed (**13**), said oxidizer being based on pure or almost pure oxygen.

10. The plant as claimed in claim 9, wherein the oxidizer feed for the burner comprises an intake line (**21**) for pure or almost pure oxygen and an air intake line (**19, 23**), these lines being controlled by inversely conjugate, proportional opening/closing means (**24, 27**) which are controlled by at least one sensor (**30**) which detects the CO₂ concentration in the smoke output by the kiln.

11. The plant as claimed in claim 8, which comprises means for recycling the gaseous charge, such means comprising a CO₂ tank (**16**) capable of delivering, during operation, an amount of CO₂ equivalent to the recycled charge.

12. The plant as claimed in claim 8, wherein the recycling means comprise a sampling line (**19**), which can be closed and is tapped off the outlet of the smoke treatment and discharge unit (**10**), and which includes means (**26**) for forced circulation toward a mixer (**22**) placed in the line (**21**) for injecting pure or almost pure oxygen.

13. The plant as claimed in claim 11, wherein the CO₂ tank (**16**) is connected, via a valve (**16a**), to the sampling line (**19**) and upstream of the mixer (**22**).

14. The plant as claimed in claim 12, wherein the mixer (**22**) is placed upstream of a heater (**35**) located upstream of the burner (**11**).

15. The plant as claimed in claim 14, wherein the heater (**35**) forms part of the circuit (**37, 35**) for cooling the calciferous compounds.

16. The plant as claimed in claim 15, wherein the circuit for cooling the calciferous compounds comprises an air intake and means (**36** and **40**) for, on the one hand, injecting this air through the outlet zone of the kiln and, on the other hand, for preventing this re-injected air from penetrating the calcining zone of said kiln.

17. The plant as claimed in claim 8 or 10, wherein the line (**19**) is provided, upstream of the mixer (**22**), with a valve (**31**) making it possible to open a vent to atmosphere (**32**) or a line (**33**) for communicating with a purification-liquefaction plant.

## Patentansprüche

1. Verfahren zum Erhalt eines CO₂-angereicherten Gasstroms aus einer Anlage zur Herstellung von Calciumverbindungen des Typs mit einem Drehofen mit einem Einlaß und einem Auslaß und in dem im Gegenstrom einerseits pulver- und oder kornförmige calciumhaltige Substanzen, die über den Einlaß eingeleitet werden und einer Calcinierungsphase, nach der die produzierten Verbindungen über den Auslaß des Ofens abgezogen werden, zu unterwerfen sind, und andererseits ein Hochtemperatur-Gasgemisch, das zur allmählichen Calcinierung der Substanzen über den Auslaß des Ofens eingeleitet wird, strömen, wobei die Calcinierung Rauch erzeugt, der CO₂ enthält und über den Einlaß des Ofens abgezogen wird,
bei dem
• von einem Brenner, der mit einem Brennstoff und mit einem Oxidationsmittel, aus dem der größte Teil des Stickstoffs entfernt worden ist, gespeist wird, in einem stationären Zustand Verbrennungsgase produziert werden,
• nach Staubentfernung und Vorerhitzen ein Teil des Rauchs aus der Calcinierung als zirkulierende Gascharge, die zur Bildung des Gasgemischs durch Inkorporierung in die Verbrennungsgase beiträgt und zur Aufrechterhaltung der Gasverbrennungs- und Strömungsparameter bestimmt ist, zur Erhöhung der CO₂-Konzentration in den Ofen zurückgeführt wird,
• dann schließlich der SO mit CO₂ angereicherte Gasstrom abgezogen wird, um ihn einer Reinigungs-Verflüssigungs-Anlage zuzuführen.

2. Verfahren nach Anspruch 1, bei dem beim Betrieb der Anlage eine CO₂-Menge, die der Rückführungscharge äquivalent ist, in den Rückführungskreislauf eingeleitet wird.

3. Verfahren nach Anspruch 1, bei dem beim Betrieb der Anlage das auf den Verbrennungsgasen des mit Brennstoff und mit Luft gespeisten Brenners basierende Gasgemisch produziert wird und dann der Rauch aus der Calcinierung zur Anreicherung der Rückführungscharge mit CO₂ unter gleichzeitiger Verringerung des Lufteintritts zugunsten eines sauerstoffangereicherten Oxidationsmittelgemischs, bis die Luft durch reinen oder fast reinen Sauerstoff ersetzt ist, allmählich zurückgeführt wird.

4. Verfahren nach einem der Ansprüche 1 bis 3, bei dem das Gasgemisch produziert wird, um es stromaufwärts der vor dem Auslaß für die produzierten Calciumverbindungen gelegenen Kühlzone in den Ofen einzuleiten, und die Kühlung mit Hilfe von Druckluft, die am Eindringen in die Calcinierungszone des Ofens gehindert wird, erreicht wird.

5. Verfahren nach einem der Ansprüche 1 bis 4, bei dem ein Teil des Rauchs aus der Calcinierung in die Atmosphäre abgeleitet wird, bis die gewünschte CO₂-Konzentration erreicht ist, und danach die Ableitung in die Atmosphäre geschlossen wird und dann die Verbindung mit einer CO₂-Reinigungs-Verflüssigungs-Linie geöffnet wird.

6. Anwendung des Verfahrens nach einem der Ansprüche 1 bis 5 auf eine Anlage zur Herstellung von Kalk.

7. Anwendung des Verfahrens nach einem der Ansprüche 1 bis 5 auf eine Anlage zur Herstellung von gefälltem Calciumcarbonat.

8. Anlage zur Durchführung des Verfahrens nach einem der Ansprüche 1 bis 5 des Typs mit:
• einem Ofen (1) mit einer Einlaßzone, die als Vorerhitzungszone (3) bezeichnet wird, einer Calcinierungszone (4) und einer Auslaßzone, die als Kühlzone (5) bezeichnet wird, durch den im Gegenstrom einerseits calciumhaltige Substanzen, die über die Einlaßzone eingeleitet werden, um einer Calcinierung unterworfen zu werden, die zur Produktion von Calciumverbindungen in der Auslaßzone führt, und andererseits ein Hochtemperatur-Gasgemisch, das zur Calcinierung der calciumhaltigen Substanzen über den Auslaß eingeleitet wird, strömen, wobei die Calcinierung Rauch erzeugt, der CO₂ enthält und von der Einlaßzone einer Behandlungs- und Austragszone (10) zugeführt wird,
• einem Brenner (11), der für die Produktion des Hochtemperatur-Gasgemischs verantwortlich ist, und
• einem Kreislauf (37, 35) zum Kühlen der Calciumverbindungen,
wobei die Anlage folgendes aufweist:
• Mittel zur Produktion eines Hochtemperatur-Gasgemischs, das aus den vom Brenner produzierten Verbrennungsgasen, aus denen der größte Teil des Stickstoffs des Oxidationsmittels entfernt worden ist, und einer im wesentlichen auf CO₂ basierenden rückführbaren Charge besteht, in der Calcinierungszone des Ofens;
• und Mittel zur Zuführung des zurückgeführten und CO₂-angereicherten Gasgemischs zu einer Reinigungs-Verflüssigungs-Anlage.

9. Anlage nach Anspruch 8, bei der der Brenner an eine Brennstoffzufuhr (15) und eine Oxidationsmittelzufuhr (13) angeschlossen ist, wobei das Oxidationsmittel auf reinem oder fast reinem Sauerstoff basiert.

10. Anlage nach Anspruch 9, bei der die Oxidationsmittelzufuhr für den Brenner eine Eintrittsleitung (21) für reinen oder fast reinen Sauerstoff und eine Lufteintrittsleitung (19, 23) aufweist, wobei diese Leitungen durch invers konjugierte, proportionale Öffnungs-/Schließungsmittel (24, 27) gesteuert werden, die durch mindestens einen Sensor (30), der die CO₂-Konzentration in dem Rauch aus dem Ofen detektiert, gesteuert werden.

11. Anlage nach Anspruch 8 mit Mitteln zur Rückführung der Gascharge, wobei derartige Mittel einen CO₂-Tank (16) aufweisen, der dazu in der Lage ist, im Betrieb eine CO₂-Menge, die der zurückgeführten Charge äquivalent ist, zu liefern.

12. Anlage nach Anspruch 8, bei der die Rückführungsmittel eine Probenahmeleitung (19), die geschlossen werden kann und vom Auslaß der Rauchbehandlungs- und -austragseinheit (10) abgeleitet wird und Mittel (26) zur Zwangszirkulation in Richtung eines in der Leitung (21) zur Einleitung von reinem oder fast reinem Sauerstoff angeordneten Mischers (22) aufweist, aufweisen.

13. Anlage nach Anspruch 11, bei der der CO₂-Tank (16) stromaufwärts des Mischers (22) über ein Ventil (16a) mit der Probenahmeleitung (19) verbunden ist.

14. Anlage nach Anspruch 12, bei der der Mischer (22) stromaufwärts einer stromaufwärts des Brenners (11) angeordneten Heizvorrichtung (35) angeordnet ist.

15. Anlage nach Anspruch 14, bei der die Heizvorrichtung (35) Teil des Kreislaufs (37, 35) zum Kühlen der Calciumverbindungen ist.

16. Anlage nach Anspruch 15, bei der der Kreislauf zum Kühlen der Calciumverbindungen einen Lufteintritt und Mittel (36 und 40), zum einen zur Einleitung dieser Luft durch die Auslaßzone des Ofens und zum anderen zur Verhinderung des Eindringens dieser wieder eingeleiteten Luft in die Calcinierungszone des Ofens, aufweist.

17. Anlage nach Anspruch 8 oder 10, bei der die Leitung (19) stromaufwärts des Mischers (22) mit einem Ventil (31) ausgestattet ist, das es ermöglicht, eine Entlüftung zur Atmosphäre (32) oder eine Leitung (33) zur Verbindung mit einer Reinigungs-Verflüssigungs-Anlage zu öffnen.

## Revendications

1. Procédé d'obtention d'un flux gazeux enrichi en CO₂ à partir d'une installation de production de composés calciques, du type comprenant un four rotatif possédant une entrée et une sortie et dans lequel circulent, à contre-courant, d'une part, des matières pulvérulentes et/ou granuleuses, calcaires, admises par l'entrée et devant subir une phase de calcination à la fin de laquelle les composés produits sont extraits par la sortie du four et, d'autre part, un mélange gazeux à température élevée admis par la sortie du four pour provoquer la calcination progressive des matières, laquelle produit des fumées incluant du CO₂ et qui sont extraites par l'entrée du four,
**caractérisé** :
• **en ce qu**'on produit, en régime stabilisé, des gaz de combustion au moyen d'un brûleur alimenté avec un combustible et avec un comburant dont l'essentiel de l'azote a été éliminé,
• en ce qu'on recycle dans le four, après dépoussiérage et réchauffage préalable, une partie des fumées de calcination en tant que charge gazeuse de circulation contribuant à constituer le mélange gazeux par incorporation aux gaz de combustion et destinée à maintenir les paramètres de combustion et d'écoulement des gaz, pour faire croître la concentration en CO₂,
• puis, enfin, en ce qu'on extrait le flux gazeux ainsi enrichi en CO₂ pour le diriger vers une installation de purification-liquéfaction.

2. Procédé selon la revendication 1, **caractérisé en ce que**, lors de la mise en service de l'installation, on injecte dans le circuit de recyclage une quantité de CO₂ équivalente à la charge de recyclage.

3. Procédé selon la revendication 1, **caractérisé en ce que**, lors de la mise en service de l'installation, on produit le mélange gazeux à partir de gaz de combustion du brûleur alimenté en combustible et en air, puis on recycle progressivement des fumées de calcination pour enrichir la charge de recyclage en CO₂, en même temps qu'on réduit l'admission d'air au bénéfice d'un mélange comburant enrichi en oxygène, jusqu'à substituer l'oxygène pur ou quasi pur à l'air.

4. Procédé selon l'une des revendications 1 à 3, **caractérisé en ce qu'**on produit le mélange gazeux de manière à l'injecter dans le four, en amont de la zone de refroidissement précédant la sortie des composés calciques produits et **en ce qu'**on assure ledit refroidissement au moyen d'air sous pression empêché de pénétrer dans la zone de calcination du four.

5. Procédé selon l'une des revendications 1 à 4, **caractérisé en ce qu'**on dérive à l'air libre au moins une partie des fumées de calcination jusqu'à atteindre la concentration souhaitée en CO₂, puis **en ce qu'**on ferme la dérivation à l'air libre et ouvre ensuite la communication avec une ligne de purification-liquéfaction du CO₂.

6. Application du procédé selon l'une quelconque des revendications 1 à 5, à une installation de production de chaux.

7. Application du procédé selon l'une quelconque des revendications 1 à 5, à une installation de production de carbonate de calcium précipité.

8. Installation pour la mise en oeuvre du procédé selon l'une des revendications 1 à 5, du type comprenant :
• un four (1) possédant une zone d'entrée, dite de préchauffage (3), une zone de calcination (4) et une zone de sortie, dite de refroidissement (5), et à travers lequel circulent à contre-courant, d'une part, des matières calcaires admises par la zone d'entrée pour subir une calcination conduisant à la production en zone de sortie de composés calciques et, d'autre part, un mélange gazeux à température élevée admis par la sortie pour provoquer la calcination des matières calcaires, laquelle produit des fumées incluant du CO₂ qui sont dirigées, à partir de la zone d'entrée, vers une station de traitement et d'évacuation (10),
• un brûleur (11) chargé de produire le mélange gazeux à température élevée,
• et un circuit (37, 35) de refroidissement des composés calciques,
**caractérisée en ce qu'**elle comprend :
• des moyens pour produire, dans la zone de calcination du four, un mélange gazeux à température élevée constitué par les gaz de combustion produits par le brûleur dont l'essentiel de l'azote du comburant a été éliminé et une charge recyclable essentiellement à base de CO₂,
• et des moyens pour diriger le mélange gazeux recyclé et enrichi en CO₂ vers une installation de purification-liquéfaction.

9. Installation selon la revendication 8, **caractérisée en ce que** le brûleur est raccordé à une alimentation (15) en combustible et à une alimentation (13) en comburant à base d'oxygène pur ou quasi pur.

10. Installation selon la revendication 9, **caractérisée en ce que** l'alimentation en comburant du brûleur comprend une ligne (21) d'admission d'oxygène pur ou quasi pur et une ligne d'admission d'air (19, 23), lesquelles sont contrôlées par des moyens (24, 27) d'ouverture-fermeture proportionnelles, inversement conjuguées, pilotés par au moins un capteur (30) de la concentration en CO₂ dans les fumées issues du four.

11. Installation selon la revendication 8, **caractérisée en ce qu'**elle comprend des moyens de recyclage de la charge gazeuse, de tels moyens comportant une réserve (16) de CO₂ à même de délivrer, lors d'une mise en service, une quantité de CO₂ équivalente à la charge recyclée.

12. Installation selon la revendication 8, **caractérisée en ce que** les moyens de recyclage comprennent une canalisation (19) de prélèvement, obturable, piquée sur la sortie de la station (10) de traitement et d'évacuation des fumées et incluant des moyens (26) de circulation forcée en direction d'un mélangeur (22) placé sur la ligne (21) d'admission en oxygène pur ou quasi pur.

13. Installation selon la revendication 11, **caractérisée en ce que** la réserve de CO₂ (16) est raccordée, avec interposition d'un robinet (16a), à la canalisation de prélèvement (19) et en amont du mélangeur (22).

14. Installation selon la revendication 12, **caractérisée en ce que** le mélangeur (22) est placé en amont d'un réchauffeur (35) situé en amont du brûleur (11).

15. Installation selon la revendication 14, **caractérisée en ce que** le réchauffeur (35) fait partie du circuit (37, 35) de refroidissement des composés calciques.

16. Installation selon la revendication 15, **caractérisée en ce que** le circuit de refroidissement des composés calciques comprend une arrivée d'air et des moyens (36 et 40) pour, d'une part, injecter cet air à travers la zone de sortie du four et, d'autre part, empêcher que cet air réinjecté ne pénètre dans la zone de calcination dudit four.

17. Installation selon la revendication 8 ou 10, **caractérisé en ce que** la ligne (19) est pourvue, en amont du mélangeur (22), d'une vanne (31) permettant d'ouvrir une mise à l'air libre (32) ou une ligne (33) de communication avec une installation de purification-liquéfaction.
